(19) **Europäisches Patentamt**

**European Patent Office**

**Office européen des brevets**

(11) **EP 1 466 763 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
**B60G 17/015** (2006.01)

(21) Anmeldenummer: **04003482.9**

(22) Anmeldetag: **17.02.2004**

(54) **Verfahren zum Betreiben einer Niveauregelanlage eines Kraftfahrzeuges**

Method of operating a levelling system for a motor vehicle

Procédé de fonctionnement d'un dispositif de réglage du niveau d'un véhicule automobile

(84) Benannte Vertragsstaaten:
**AT BE BG CH CY CZ DE DK EE ES FI FR GB GR HU IE IT LI LU MC NL PT RO SE SI SK TR**

(30) Priorität: **10.04.2003 DE 10316760**

(43) Veröffentlichungstag der Anmeldung:
**13.10.2004 Patentblatt 2004/42**

(73) Patentinhaber: **Continental Aktiengesellschaft**
**30165 Hannover (DE)**

(72) Erfinder:
• **Krause, Michael**
**38179 Schwülper (DE)**

• **Schünemann, Werner**
**29308 Winsen (DE)**
• **Schaumburg, Harald**
**31157 Sarstedt (DE)**

(56) Entgegenhaltungen:
**EP-A- 0 689 116     EP-A- 0 808 732**
**EP-A- 1 153 773     FR-A- 2 630 684**
**US-A- 3 404 898**

• **PATENT ABSTRACTS OF JAPAN Bd. 0071, Nr. 33 (M-221), 10. Juni 1983 (1983-06-10) -& JP 58 049507 A (AISHIN SEIKI KK; others: 01), 23. März 1983 (1983-03-23)**

**Beschreibung**

Die Erfindung betrifft ein Verfahren zum Betreiben einer Niveauregelanlage eines Kraftfahrzeuges gemäß dem Oberbegriff des Patentanspruchs 1.

Niveauregelanlagen finden in Kraftfahrzeugen einen immer größeren Verbreitungsgrad, da diese beispielsweise bei schnellen Beschleunigungsvorgängen oder bei einem ungleichförmigen Beladungszustand des Fahrzeugs einen Nickausgleich der Fahrzeugkarosserie gegenüber dem Fahrwerk ermöglichen.

Diese Anlagen umfassen üblicherweise ein Regelungsgerät, das über Sensorleitungen mit Sensoren zur direkten oder indirekten Ermittlung des Abstandes der Fahrzeugkarosserie beziehungsweise des Fahrzeugrahmens gegenüber den Fahrzeugachsen verbunden ist und mit Aktuatoren über Signalleitungen in Verbindung steht, mit deren Hilfe der Abstand der Fahrzeugkarosserie gegenüber diesen Radachsen gezielt verstellbar ist. Die Sensoren sind dabei in der Regel als Wegsensoren ausgebildet, während die Aktuatoren hydraulisch oder pneumatisch betätigbare Kolben-Zylinder-Anordnungen oder Luftfedern sind. Darüber hinaus gehört zu einer solchen Anlage auch eine hydraulische oder pneumatische Pumpe, elektrische Schaltventile sowie gegebenenfalls ein Druckmittelspeicher. Eine solche Niveauregelungsanlage ist beispielsweise aus der DE 100 64 395 C2 bekannt.

Bei einer quer zur Fahrzeuglängsachse nichtparallelen Ausrichtung der Fahrzeugkarosserie zu den jeweiligen Fahrzeugachsen liegt ein sogenannter Fahrzeugschiefstand vor. Eine solche Betriebssituation kann beispielsweise dadurch gegeben sein, dass die Räder der rechten Fahrzeugseite auf einem Bordstein stehen, während sich die gegenüber liegenden Räder etwas tiefer auf der Fahrbahn abstützen. Die DE 198 21 305 A 1 und die EP 752 329 B1 beschreiben das Betreiben von Niveauregelungsanlagen in einer solchen Situation, bei der der Fahrzeugschiefstand beispielsweise erst dann im Sinne einer möglichst horizontalen Karosserieausrichtung ausgeregelt wird, wenn das Fahrzeug nach einem Fahrzeugbeladevorgang wieder von dem Bordstein herunter gefahren ist oder wenn zuvor festgelegte Schiefstandgrenzwerte überschritten werden.

Außerdem offenbart die DE 100 22 834 A1 ein Verfahren zum Verhindern des Umkippens eines luftgefederten Fahrzeuges auf einer schrägen Fahrbahn, wobei die dort beschriebene Betriebssituation vergleichbar mit der vorgenannten Bordsteinsituation ist. Daher betrifft diese Druckschrift ein Fahrzeug mit einer Niveauregelungsanlage, die dann in besonderer Weise wirksam wird, wenn ein Fahrzeug mit hochliegendem Schwerpunkt, also beispielsweise ein hochaufbauendes Nutzfahrzeug wie etwa ein Reisebus, mit seiner Längserstreckung quer zu einem Hang (also auf einer Höhenlinie) steht oder fährt.

Bei dem dort geschilderten Verfahren wird ein Umkippen des Fahrzeugs etwa bei einer Gewichtsverlagerung innerhalb des Reisebusses durch die Fahrgäste dadurch verhindert, indem nach dem eintreffen bestimmter regelungstechnischer Vorbedingungen beispielsweise alle Luftfederbälge des Fahrzeuges entlüftet werden. Nach dieser Druckschrift können in einer solchen Gefahrensituation aber auch nur die höhergelegenen Luftfederbälge seitenweise entlüftet und/oder die tiefergelegenen Luftfederbälge seitenweise belüftet werden.

Schließlich ist aus der DE 40 03 766 C2 eine Niveauregelungseinrichtung für ein luftgefedertes Fahrzeug bekannt, bei der die Niveauregulierungstätigkeit in solchen Betriebssituationen in einer wählbaren Zeitspanne unterbunden wird, wenn die Geschwindigkeit, mit der sich eine Radachse des Fahrzeuges in Bezug zum Fahrzeugrahmen bewegt, einen vorgegebenen Schwellenwert überschreitet. Durch dieses Verfahren können all diejenigen dynamischen Einfedervorgänge hinsichtlich des Ansprechens der Niveauregelungsanlage unbeachtet bleiben, die von normalen fahrdynamischen Vorgängen wie Geschwindigkeitsänderungen, Kurvenfahrt, Schlaglochdurchfahrt u.ä. erzeugt werden.

Neben dem geschilderten Schiefstand gibt es insbesondere beim Betrieb von Geländefahrzeugen eine Betriebssituation, bei der das Fahrzeug mit seiner Längsachse nicht genau bergauf oder bergab weist, sondern in der diese schief zum Hang ausgerichtet ist. Sofern ein solches Geländefahrzeug mit einer konventionellen Niveauregelungsanlage ausgerüstet ist, besteht beim Überschreiten von bestimmten Hangneigungs- und Schiefstandwinkeln die Gefahr, dass das Fahrzeug bei einer Niveauausgleichstätigkeit der Niveauausgleichseinrichtung in eine unstabile Lage gerät und umstürzen kann.

Vor diesem Hintergrund besteht die Aufgabe an die Erfindung darin, ein Verfahren zum Betreiben einer Niveauregelanlage vorzustellen, mit dem die geschilderte Gefahrensituation vermieden oder doch zumindest beseitigt werden kann.

Die Lösung dieser Aufgabe ergibt sich aus den Merkmalen des Hauptanspruchs, während vorteilhafte Ausgestaltungen oder Weiterbildungen der Erfindung den Unteransprüchen entnehmbar sind.

Demnach betrifft das Verfahren den Betrieb einer gattungsgemäßen Niveauregelanlage eines Kraftfahrzeuges, mit einem Regelungsgerät, mit Sensoren zur direkten oder indirekten Ermittlung des Abstandes zwischen der Fahrzeugkarosserie beziehungsweise dem Fahrzeugrahmen und den Achsen oder Aufsetzpunkten der Fahrzeugräder sowie mit Aktuatoren wie Kolben-Zylinder-Anordnungen oder Luftfedern zur Verstellung des Abstandes der Fahrzeugkarosserie zu diesen Radachsen oder Radaufstandspunkten. Bei diesem Regelungsgerät wird auf der Grundlage der ermittelten Abstandsmesswerte in einem Soll-Ist-Vergleich überprüft, ob die Abstände der Fahrzeugkarosserie zu den jeweiligen Radachsen vorbestimmte Grenzwerte überschreiten. Bei einem Überschreiten dieser Grenzwerte wird einer oder mehrere der Aktuatoren betätigt, um einen Niveauausgleich im Sinne einer möglichst horizontalen Ausrichtung der Fahrzeugkarosserie zu erreichen.

Zur Vermeidung oder zumindest zur Beseitigung der vorgenannten Gefahrensituation ist zudem vorgesehen, dass das Regelungsgerät die automatische Niveauausgleichsregelung unterbindet oder die Möglichkeit eines durch die Regeleinrichtung oder die Fahrzeugkonstruktion begrenzten Hangausgleiches bietet (Hangstabilisierung), wenn sich das Fahrzeug in einer für die Fahrzeugsicherheit unzulässigen Hang- und Schiefstandlage befindet.

Zur Erfassung der Hang- und Schiefstandlage des Fahrzeuges, also insbesondere des Hangwinkels und des Schiefstandwinkels, werden in einer bevorzugten Ausgestaltung der Erfindung Sensorinformationen über die Geschwindigkeit, vorzugsweise gemessen mit Hilfe von wenigstens einem Drehzahlsensor an wenigstens einem Fahrzeugrad sowie die Längsbeschleunigung und die Querbeschleunigung des Fahrzeuges genutzt. Diese Messwerte werden in modernen Fahrzeugen in der Regel schon zur Steuerung und Regelung anderer Fahrzeugfunktionen erfasst und stehen somit in der Regel ohne zusätzlichen Kostenaufwand zur Verfügung.

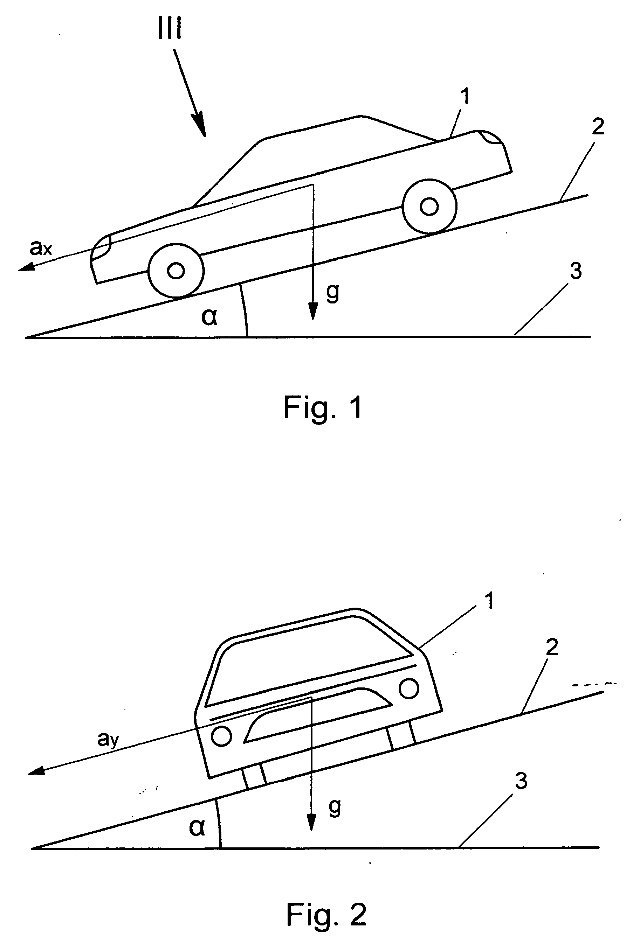

Zur Verdeutlichung der verschiedenen Hanglagen eines Kraftfahrzeuges sind der Beschreibung drei Figuren beigefügt, die ein Kraftfahrzeug 1 an einem Hang 2 zeigen, der gegenüber der Horizontalen 3 einen Hangwinkel α geneigt ist. In Fig. 1 und Fig. 2 ist das Fahrzeug 1 in Betriebssituationen dargestellt, in denen der Betrieb einer gattungsgemäßen Niveauregelungsanlage an sich unkritisch ist. So zeigt Fig. 1 das Fahrzeug 1 bei einer Bergabausrichtung seiner Längsachse, bei der auf dieses eine Längsbeschleunigung in Richtung der Längsbeschleunigungsachse $a_x$ und die Gravitationsbeschleunigung g wirkt. Der Wert dieser Längsbeschleunigung auf das Fahrzeug beträgt dabei $a_x = g \cdot \sin \alpha$, während g bekanntermaßen eine Naturkonstante ist.

In dieser Situation greift die Niveauregelungsanlage in der Regel nicht ein, da die Karosserie beziehungsweise der hier nicht gesondert dargestellte Fahrzeugrahmen sowohl an der Vorderachse als auch an der Hinterachse des Fahrzeuges 1 einen zulässigen und vorbestimmten Abstand einhält.

In Fig. 2 ist eine Betriebssituation dargestellt, in der die Längsachse des Kraftfahrzeuges im rechten Winkel zum Hang 2 ausgerichtet ist, so dass auf das Fahrzeug 1 eine Hangabtriebsbescheunigung $a_y = g \cdot \sin \alpha$ sowie die Gravitationsbeschleunigung g wirkt, während bei konstanter Fahrgeschwindigkeit oder bei stillstehendem Fahrzeug der Wert für die Fahrzeuglängsbeschleunigung $a_x = 0$ ist. In einer solchen Betriebssituation kann bei großen Hangneigungswinkeln α eine Niveauregelungsanlage mit Vorteil eingesetzt werden, um, wie eingangs geschildert, beispielsweise Luftfedern an der hangabwärtsweisenden Seite zu befüllen und gleichzeitig Luftfedern an der hangaufwärtsweisenden Seite zu entlüften. Durch diese Vorgehensweise wird in einem zulässigen Umfang ein Niveauausgleich in dem Sinne geschaffen, dass der Fahrzeugrahmen beziehungsweise die Fahrzeugkarosserie etwas in Richtung zu einer Lage ausgerichtet wird, die parallel zur Horizontalen 3 ist.

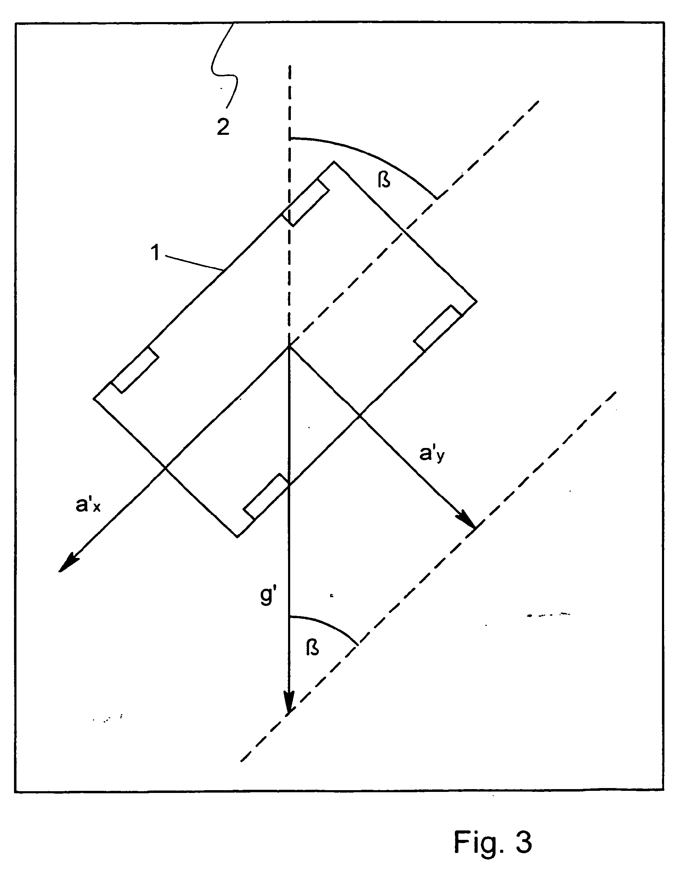

Fig. 3 zeigt dagegen das Kraftfahrzeug 1 in einer schematischen Draufsicht III auf den Hang 2 gemäß Fig. 1 in einer Betriebssituation, in der dessen Längsachse 4 derart ausgerichtet ist, dass diese zwischen den in Fig. 1 und Fig. 2 gezeigten Ausrichtungen liegt. In dieser Situation ist die Fahrzeuglängsachse 4 demnach um einen Schiefstandwinkel β gegen die Lage verschwenkt, in der die Fahrzeugvorderseite und die Fahrzeugrückseite direkt bergauf oder bergab weist, jedoch nicht auf einer Höhenlinie des Hangs 2 liegt.

Bei einer solchen Fahrzeugausrichtung wirken auf das Fahrzeug 1 die Beschleunigungswerte $a'_x$, $a'_y$ sowie g', die die Vektorkomponenten der Beschleunigungswerte $a_x$, $a_y$ und g angeben. Sofern der Hangneigungswinkel α und der Schiefstandwinkel β unzulässig große Werte haben, kann die Betätigung einer Niveauregelanlage zu Beschleunigungswerte $a'_x$ und $a'_y$ führen, die ein Umkippen des Fahrzeuges verursachen. Diese auf jeden Fall zu vermeidende Gefahr besteht insbesondere bei Fahrzeugen mit einem hohen Aufbau und mit einer Niveauregelanlage, die die genanten Aktuatoren oder Luftfedern nicht radindividuell sondern nur achsweise betätigt.

Der Hangneigungswinkel α und Schiefstandwinkel β lassen sich vorzugsweise durch folgende mathematisch-physikalischen Beziehungen bestimmen:

Eine Addition der Hangabtriebsbeschleunigungskomponenten ergibt $a'_x + a'_y = g'$, wobei der Wert g' auch durch $g' = g \cdot \sin \alpha$ bestimmt ist.

Mit $\cos \beta = \dfrac{a'_x}{g'}$ ergibt sich $a'_x = g' \cdot \cos \beta$. Durch Einsetzen des Wertes für g' gelangt man zu der Hangabtriebsbeschleunigungskomponente

$$a'_x = \sin \alpha \cdot \cos \beta \cdot g . \qquad (1)$$

In gleicher Weise bestimmt sich die Hangabtriebsbeschleunigungskomponente $a'_y$ durch $\sin \beta = \dfrac{a'_y}{g'}$ und $a'_y = g' \cdot \sin \beta$. Durch Einsetzen des Wertes für g' gelangt man zu der Hangabtriebsbeschleunigungskomponente

$$a'_y = \sin \alpha \cdot \sin \beta \cdot g . \qquad (2)$$

Durch Kombination der Gleichungen (1) und (2) ergibt sich

$$\frac{a'_x}{a'_y} = \frac{\cos \beta}{\sin \beta} \quad , \qquad (3)$$

woraus sich

$$\frac{a'_y}{a'_x} = \tan \beta \qquad (4)$$

herleiten lässt.

Beispielsweise durch eine Reihenentwicklung kann dann aus Gleichung (4) der Schiefstandwinkel β errechnet werden. Ein derart ermittelter Schiefstandwinkel β kann sodann in Gleichung (1) eingesetzt werden, so dass mit dieser Gleichung (1) dann der Hangwinkel α berechenbar ist.

Wie die obige Herleitung der Winkel α und β zeigt, wird zu deren Bestimmung in vorteilhafter Weise keine gesonderte Sensorik benötigt, was die Nutzung des erfindungsgemäßen Verfahrens in der Regeleinrichtung besonders kostengünstig werden lässt.

Diese Regelungseinrichtung, die Bestandteil eines Niveauausgleichsregelgerätes sein kann, wird nun so betrieben, dass diese auf das Vorhandensein einer unzulässigen Hang- und Schieflage beispielsweise dann schließt, wenn der Fahrzeuggeschwindigkeitswert gleich oder annähernd Null und der Längs- und der Querbeschleunigungswert größer als Null ist.

Bei einem Fahrgeschwindigkeitswert größer Null wird der gemessene Längsbeschleunigungswert um den aus dem Fahrgeschwindigkeitswert nach der Zeit abgeleiteten Fahrzeuglängsbeschleunigungswert reduziert. Sofern sich aus dieser Rechenoperation ein Längsbeschleunigungswert ergibt, der um einen vorbestimmten Wert von Null abweicht, so wird dieser zur Überprüfung der Zulässigkeit der Hang- und Schiefstandlage des Fahrzeuges herangezogen.

Zudem wird in einer solchen Betriebssituation mit Hilfe eines Lenkwinkelsignals festgestellt, ob das Fahrzeug gerade durch eine Kurve gefahren wird und wie deren Kurvenradius ist. Mit dem Werten von Fahrgeschwindigkeit und Lenkwinkel lässt sich die kurvenbezogene Querbeschleunigung des Fahrzeuges bestimmen. Ein anschließender Vergleich mit der gemessenen Querbeschleunigung gibt dann an, ob sich das Fahrzeug in Verbindung mit der ermittelten Hanglage in einer unzulässige Schiefstandlage befindet.

Unzulässige Fahrzeughanglagen sind in dem Regelungsgerät vorzugsweise als solche definiert, bei denen das Fahrzeug an einem Hang mit einer Hangneigung α steht, die einen vorgegebenen Hangneigungsgrenzwert $\alpha_{Grenz}$ überschreitet und zu diesem Hang einen Schiefstandwinkel β einnimmt, der einen Schiefstandgrenzwert $\beta_{Grenz}$ übertrifft. Der Hangneigungsgrenzwert $\alpha_{Grenz}$ und der Schiefstandgrenzwert $\beta_{Grenz}$ sind jedoch abhängig von den räumlichen Abmessungen des Fahrzeuges, seiner typischen Beladung und Gewichtsverteilung sowie von dessen Gesamtgewicht. Für ein typisches europäisches Mittelklassefahrzeug dürfte der Hangneigungsgrenzwert $\alpha_{Grenz}$ größer als 20° und der Schiefstandgrenzwert $\beta_{Grenz}$ größer als 30° sein.

In einer weiteren Ausgestaltung des erfindungsgemäßen Verfahrens kann mit Vorteil vorgesehen sein, dass das Regelungsgerät bei einem Überschreiten des Hangneigungsgrenzwertes $\alpha_{Grenz}$ und des Schiefstandgrenzwertes $\beta_{Grenz}$ diesen Zustand und/oder den Hangneigungs- und Schiefstandwinkel optisch und/oder akustisch dem Fahrzeugführer durch Aktivierung diesbezüglicher Anzeigegeräte und/oder Lautsprecher zur Kenntnis bringt.

Darüber hinaus ist es Bestandteil der Erfindung, dass das Regelungsgerät nach einer Beendigung des automatischen Niveauregelungsverfahrens eine manuell ausgelöste Betätigung der Aktuatoren an den Radachsen zulässt.

In diesem Zusammenhang ist es erfindungsgemäß vorteilhaft, wenn das Regelungsgerät dem Fahrzeugführer mit Hilfe eine Anzeigevorrichtung oder durch Sprachausgabe empfiehlt, welche der jeweils betroffenen Aktuatoren und in welcher Weise diese nach Beurteilung des Regelungsgeräts zu betätigen sind, um die Fahrzeugkarosserie trotz der ermittelten unzulässigen Hang- und Schiefstandlage in eine komfortablere und/oder sicherere räumliche Lage zu bringen. Dieser Regelvorgang kann auch automatisch mit oder ohne vorherige Freigabe durch den Fahrzeugführer achs- oder radweise erfolgen (manuell oder automatisch ausgelöste Hangstabilisierung).

Zudem sollten die zur Durchführung dieses Verfahren genutzten Sensorsignale vor deren Weiterverarbeitung vorzugsweise in dem Regelungsgerät zur Vermeidung von Signalsprüngen gefiltert werden, so dass sich plausible Regelungs- und Informationswerte für die Niveauregelungsanlage sowie für den Fahrzeugführer ergeben.

Wie bereits angedeutet, wird es als besonders vorteilhaft angesehen, wenn das erfindungsgemäße Verfahren in einem Regelungsgerät eines Geländefahrzeuges oder eines Nutzfahrzeuges ausgeführt wird. Eine sinnvolle Verwendung in einem Personenfahrzeug ist ebenso möglich.

## Patentansprüche

1. Verfahren zum Betreiben einer Niveauregelanlage eines Kraftfahrzeuges,
   zu der ein Regelungsgerät, Sensoren zur direkten oder indirekten Ermittlung des Abstandes der Fahrzeugkarosserie zu den Achsen der Fahrzeugräder und Aktuatoren zur Verstellung des Abstandes der Fahrzeugkarosserie zu diesen Radachsen gehören, bei dem das Regelungsgerät auf der Grundlage der ermittelten Messwerte in einem Soll-Ist-Vergleich überprüft, ob die Abstände der Fahrzeugkarosserie zu den Radachsen vorbestimmte Grenzwerte überschreiten,

und bei dem bei einer Abweichung von diesen Grenzwerten einer oder mehrere der Aktuatoren betätigt werden, um einen Niveauausgleich im Sinne einer horizontalen Ausrichtung der Fahrzeugkarosserie zu erreichen,

**dadurch gekennzeichnet,**

**dass** das Regelungsgerät die automatische Niveauausgleichsregelung unterbindet, wenn sich das Fahrzeug in einer für die Fahrzeugsicherheit unzulässigen Hang- und Schiefstandlage befindet.

2. Verfahren nach Anspruch 1, **dadurch gekennzeichnet, dass** die unzulässige Hang- und Schiefstandlage mit Hilfe von Sensorinformationen über die Geschwindigkeit (Fahrzeugraddrehzahl), Längsbeschleunigung und Querbeschleunigung des Fahrzeuges ermittelt wird.

3. Verfahren nach Anspruch 1 oder Anspruch 2, **dadurch gekennzeichnet, dass** auf das Vorhandensein einer unzulässigen Hang- und Schiefstandlage geschlossen wird, wenn der Fahrzeuggeschwindigkeitswert gleich oder annähernd Null und der Längs- und der Querbeschleunigungswert größer Null ist.

4. Verfahren nach wenigstens einem der vorherigen Ansprüche, **dadurch gekennzeichnet, dass** unzulässige Hang- und Schiefstandlagen als solche definiert sind, bei denen das Fahrzeug an einem Hang mit einer Hangneigung ($\alpha$) steht, die einen vorgegebenen Hangneigungsgrenzwert ($\alpha_{Grenz}$) überschreitet und zu diesem Hang einen Schiefstandwinkel ($\beta$) einnimmt, der einen Schiefstandgrenzwert ($\beta_{Grenz}$) überschreitet.

5. Verfahren nach Anspruch 4, **dadurch gekennzeichnet, dass** der Hangneigungsgrenzwert ($\alpha_{Grenz}$) und der Schiefstandgrenzwert ($\beta_{Grenz}$) abhängig von den räumlichen Abmessungen des Fahrzeuges, von seiner typischen Beladung, von der Gewichtsverteilung sowie von seinem Gesamtgewicht sind.

6. Verfahren nach Anspruch 5, **dadurch gekennzeichnet, dass** für ein europäisches Mittelklassefahrzeug der Hangneigungsgrenzwert ($\alpha_{Grenz}$) größer als 20° und der Schiefstandgrenzwert ($\beta_{Grenz}$) größer als 30° ist.

7. Verfahren nach wenigstens einem der vorherigen Ansprüche, **dadurch gekennzeichnet, dass** das Regelungsgerät bei einem Überschreiten des Hangneigungsgrenzwertes ($\alpha_{Grenz}$) und des Schiefstandgrenzwertes ($\beta_{Grenz}$) diesen Zustand und/oder dessen Werte optisch und/oder akustisch dem Fahrzeugführer durch Aktivierung diesbezüglicher Anzeigegeräte und/oder Lautsprecher zur Kenntnis bringt.

8. Verfahren nach wenigstens einem der vorherigen Ansprüche, **dadurch gekennzeichnet, dass** das Regelungsgerät nach einer Beendigung des automatischen Niveauregelungsverfahrens eine manuell ausgelöste Betätigung der Aktuatoren zulässt.

9. Verfahren nach Anspruch 8, **dadurch gekennzeichnet, dass** das Regelungsgerät dem Fahrzeugführer mit Hilfe einer Anzeigevorrichtung oder durch Sprachausgabe empfiehlt, welche der jeweils betroffenen Aktuatoren und in welcher Weise diese nach Beurteilung des Steuerungsgeräts zu betätigen sind, um die Fahrzeugkarosserie trotz der ermittelten unzulässigen Hang- und Schiefstandlage in eine komfortablere und/oder sicherere räumliche Lage zu bringen.

10. Verfahren nach wenigstens einem der vorherigen Ansprüche, **dadurch gekennzeichnet, dass** bei fahrendem Fahrzeug die aktuelle Fahrgeschwindigkeit ermittelt sowie mittels eines Lenkwinkelsensors der aktuelle Lenkwinkel des Fahrzeugs festgestellt wird, und dass bei einer Kurvenfahrt an einem Hang der Einfluss der aus dieser Kurvenfahrt resultierenden Quer- und Längsbeschleunigung auf das Fahrzeug bei der Bestimmung einer unzulässigen Hang- und Schiefstandlage sowie eines diesbezüglichen Niveauausgleichs berücksichtigt wird.

11. Verfahren nach wenigstens einem der vorherigen Ansprüche, **dadurch gekennzeichnet, dass** die von den Sensoren gemessenen Sensorsignale vor einer Weiterverarbeitung in dem Regelungsgerät zur Vermeidung von Signalsprüngen gefiltert werden.

12. Verfahren nach wenigstens einem der vorherigen Ansprüche, **dadurch gekennzeichnet, dass** das Verfahren in einem Regelungsgerät eines Personenkraftfahrzeuges, eines Geländefahrzeuges oder eines Nutzfahrzeuges ausgeführt wird.

**Claims**

1. Method for operation of a level control system for a motor vehicle, which includes a regulation unit, sensors for direct or indirect determination of the distance between the vehicle bodywork and the axles of the vehicle wheels, and actuators for adjustment of the distance between the vehicle bodywork and these wheel axles, in which the regulation unit carries out a nominal-actual comparison on the basis of the determined measured values in order to check whether the distances between the vehicle bodywork and the wheel axles exceed predetermined limit values,

and in which, in the event of a discrepancy from these limit values, one or more of the actuators is or are operated in order to achieve level compensation in the sense of horizontal alignment of the vehicle bodywork,

**characterized**

**in that** the regulation unit suppresses the automatic level compensation control when the vehicle is in a sloping and slewed position which is not permissible for vehicle safety.

2. Method according to Claim 1, **characterized in that** the impermissible sloping and slewed position is determined with the aid of sensor information from the speed (vehicle wheel rotation speed), longitudinal acceleration and lateral acceleration of the vehicle.

3. Method according to Claim 1 or Claim 2, **characterized in that** the presence of an impermissible sloping and slewed position is deduced when the vehicle speed value is equal to or approximately zero, and the longitudinal and lateral acceleration value is greater than zero.

4. Method according to at least one of the preceding claims, **characterized in that** impermissible sloping and slewed positions are defined as those in which the vehicle is on a slope with a slope inclination of $(\alpha)$ which is greater than a predetermined slope inclination limit value $(\alpha_{limit})$ and with respect to this slope assume a slew angle $(\beta)$ which is greater than a slew limit value $(\beta_{limit})$.

5. Method according to Claim 4, **characterized in that** the slope inclination limit value $(\alpha_{limit})$ and the slew limit value $(\beta_{limit})$ are dependent on the physical dimensions of the vehicle, on its typical load, on the weight distribution and on its total weight.

6. Method according to Claim 5, **characterized in that**, for a European medium-class vehicle, the slope inclination limit value $(\alpha_{limit})$ is greater than 20°, and the slew limit value $(\beta_{limit})$ is greater than 30°.

7. Method according to at least one of the preceding claims, **characterized in that**, if the slope inclination angle is greater than the limit value $(\alpha_{limit})$ and the slew angle is greater than the slew limit value $(\beta_{limit})$, the regulation unit notifies this state and/or its values visually and/or audibly to the vehicle driver by activation of display units and/or loudspeakers for this purpose.

8. Method according to at least one of the preceding claims, **characterized in that** the regulation unit allows manually initiated operation of the actuators after the end of the automatic level control method.

9. Method according to Claim 8, **characterized in that** the regulation unit uses a display apparatus or a speech output to recommend to the vehicle driver which of the respectively affected actuators should be operated and in what manner, on the basis of the assessment of the control unit, in order to bring the vehicle bodywork to a more comfortable and/or safer spatial position despite the impermissible sloping and slewed position that has been determined.

10. Method according to at least one of the preceding claims, **characterized in that**, when the vehicle is moving, the current speed of travel is determined and the current steering angle of the vehicle is detected by means of a steering angle sensor, and **in that**, when turning on a slope, the influence of the lateral and longitudinal acceleration resulting from this turn on the vehicle is taken into account in the determination of an impermissible sloping and slewed position, and in the determination of level compensation for this purpose.

11. Method according to at least one of the preceding claims, **characterized in that** the sensor signals which are measured by the sensors are filtered before further processing in the regulation unit, in order to avoid sudden signal changes.

12. Method according to at least one of the preceding claims, **characterized in that** the method is carried out in a regulation unit in a passenger vehicle, an off-road vehicle or a commercial vehicle.

## Revendications

1. Procédé pour faire fonctionner un équipement de régulation de niveau d'un véhicule automobile, duquel font partie un régulateur, des capteurs pour la détermination directe ou indirecte de l'écart entre la carrosserie du véhicule et les essieux des roues du véhicule et des actionneurs pour régler l'écart entre la carrosserie du véhicule et ces essieux, avec lequel le régulateur, en se basant sur les valeurs mesurées déterminées, vérifie lors d'une comparaison consigne/réel si les écarts entre la carrosserie du véhicule et les essieux dépassent des valeurs limites prédéfinies, et avec lequel, en cas de différence par rapport à ces valeurs limites, un ou plusieurs actionneurs sont actionnés afin d'obtenir un équilibrage du niveau dans le sens d'une orientation horizontale de la carrosserie du véhicule, **caractérisé en ce que** le régulateur inhibe la régulation automatique de l'équilibrage du niveau lorsque le véhicule se trouve dans une position en pente et inclinée non tolérable pour la sécurité du véhicule.

2. Procédé selon la revendication 1, **caractérisé en ce que** la position en pente et inclinée non tolérable est déterminée à l'aide d'informations de capteur par le biais de la vitesse (vitesse de rotation des roues du véhicule), de l'accélération longitudinale et de l'accélération transversale du véhicule.

3. Procédé selon la revendication 1 ou la revendication 2, **caractérisé en ce qu'**il est conclu à la présence d'une position en pente et inclinée non tolérable lorsque la valeur de la vitesse du véhicule est égale à ou proche de zéro et que la valeur de l'accélération longitudinale et de l'accélération transversale est supérieure à zéro.

4. Procédé selon au moins l'une des revendications précédentes, **caractérisé en ce que** les positions en pente et inclinées non tolérables sont définies comme étant celles où le véhicule se trouve dans une pente ayant une inclinaison ($\alpha$) qui dépasse une valeur limite de pente prédéfinie ($\alpha_{Grenz}$) et adopte par rapport à cette pente un angle d'inclinaison ($\beta$) qui dépasse une valeur limite d'inclinaison prédéfinie ($\beta_{Grenz}$).

5. Procédé selon la revendication 4, **caractérisé en ce que** la valeur limite de pente ($\alpha_{Grenz}$) et la valeur limite d'inclinaison ($\beta_{Grenz}$) dépendent des dimensions spatiales du véhicule, de son chargement type, de la répartition des masses ainsi que de sa masse totale.

6. Procédé selon la revendication 5, **caractérisé en ce que** pour un véhicule européen de catégorie moyenne, la valeur limite de pente ($\alpha_{Grenz}$) est supérieure à 20° et la valeur limite d'inclinaison ($\beta_{Grenz}$) est supérieure à 30°.

7. Procédé selon au moins l'une des revendications précédentes, **caractérisé en ce que** le régulateur, en cas de dépassement de la valeur limite de pente ($\alpha_{Grenz}$) et de la valeur limite d'inclinaison ($\beta_{Grenz}$), porte cette situation et/ou ces valeurs à la connaissance du conducteur du véhicule de manière visuelle et/ou sonore en activant des indicateurs et/ou des haut-parleurs en rapport avec cette situation.

8. Procédé selon au moins l'une des revendications précédentes, **caractérisé en ce que** le régulateur autorise un actionnement déclenché manuellement des actionneurs après avoir mis fin au procédé de régulation automatique du niveau.

9. Procédé selon la revendication 8, **caractérisé en ce que** le régulateur recommande au conducteur du véhicule, à l'aide d'un dispositif d'affichage ou par un message vocal, les actionneurs à chaque fois concernés et la manière dont il faut les actionner d'après l'appréciation de la commande afin d'amener la carrosserie du véhicule dans une position tridimensionnelle confortable et/ou sûre, et ce malgré la position en pente et inclinée non tolérable déterminée.

10. Procédé selon au moins l'une des revendications précédentes, **caractérisé en ce que** lorsque le véhicule est en déplacement, la vitesse de déplacement actuelle est déterminée ainsi que l'angle de direction actuel du véhicule au moyen d'un détecteur d'angle de direction, et qu'en cas de virage dans une pente, l'influence sur le véhicule de l'accélération transversale et longitudinale résultant de ce virage est prise en compte lors de la détermination d'une position en pente et inclinée non tolérable ainsi qu'un équilibrage de niveau en rapport avec celle-ci.

11. Procédé selon au moins l'une des revendications précédentes, **caractérisé en ce que** les signaux de capteur mesurés par les capteurs sont filtrés avant la suite du traitement dans le régulateur afin d'éviter les sauts de signal.

12. Procédé selon au moins l'une des revendications précédentes, **caractérisé en ce que** le procédé est mis en oeuvre dans un régulateur d'un véhicule de tourisme, d'un véhicule tous-terrains ou d'un véhicule utilitaire.

III

1

2

$a_x$

$g$

$\alpha$

3

## Fig. 1

1

2

$a_y$

$g$

$\alpha$

3

## Fig. 2

8

Fig. 3